# EUROPEAN PATENT APPLICATION

(11) **EP 4 848 382 A1**
(43) Date of publication of application: **02.12.2026**
(21) Application number: 24920178.1
(22) Date of filing: 16.12.2024
(51) Int. Cl.: H01M 4/86, B01J 23/89, B01J 35/60, B01J 35/61, B01J 35/64, H01M 4/90, H01M 8/10, H01M 12/06, H01M 12/08

(54) **ELECTRODE CATALYST**

(30) Priority: 22.01.2024 JP 2024007398
(71) Applicant: Panasonic Intellectual Property Management Co., Ltd., Kadoma-shi, Osaka 571-0057 (JP)
(72) Inventor: NAKAO, Takuya, Kadoma-shi, Osaka 571-0057 (JP); MIYATA, Nobuhiro, Kadoma-shi, Osaka 571-0057 (JP); KAMATA, Tomoya, Kadoma-shi, Osaka 571-0057 (JP); SHINTANI, Haruhiko, Kadoma-shi, Osaka 571-0057 (JP); KUROHA, Tomohiro, Kadoma-shi, Osaka 571-0057 (JP)
(74) Representative: Grünecker Patent- und Rechtsanwälte PartG mbB
(86) International application number: PCT/JP2024/044395
(87) International publication number: WO 2025/158822

(57) **Abstract**

An electrode catalyst according to the present disclosure includes: a mesoporous material; and catalyst metal particles supported at least within the mesoporous material and including platinum and a metal different from platinum. The mesoporous material has mesopores with a mode radius of greater than or equal to 1 nm and less than or equal to 25 nm and a pore volume of greater than or equal to 1.0 cm³/g and less than or equal to 3.0 cm³/g. The catalyst metal is represented by the chemical formula PtₓCo_{1-y}Ni_{y}, x is greater than or equal to 1 and less than or equal to 3 and y is greater than or equal to 0.20 and less than or equal to 0.47. The catalyst metal particles include an L1₀ phase.

## Description

### Technical Field

The present disclosure relates to an electrode catalyst.

### Background Art

A polymer electrolyte fuel cell (PEFC) includes a membrane electrode assembly for causing an electrochemical reaction (power generation reaction) between a fuel gas containing hydrogen and an oxidant gas containing oxygen.

In general, an electrode catalyst layer constituting a membrane electrode assembly is formed by preparing a catalyst paste in which an electrode catalyst constituted by supporting a catalyst metal such as platinum on a catalyst support made of an electrically conductive material such as carbon black, and a polymer electrolyte having proton conductivity (hereinafter referred to as an ionomer) are dispersed in a solvent such as water or alcohol, applying the catalyst paste to a polymer electrolyte membrane or another substrate, and drying the catalyst paste.

The microstructure (hereinafter referred to as a three-phase interface structure) of the electrode catalyst layer thus formed is a structure in which the electrode catalyst is coated with the ionomer. In this three-phase interface structure, from the viewpoint of supplying protons to the surface of the catalyst metal, it has been considered that bringing the catalyst metal and the ionomer into contact with each other leads to performance improvement.

However, in recent years, it has been pointed out that the catalyst metal in contact with the ionomer is poisoned by the ionomer, and the catalytic activity is rather reduced.

With respect to the problem of the decrease in the activity of the electrode catalyst, in order to suppress the poisoning of the catalyst metal by the ionomer, a method has been proposed in which catalyst metal particles are supported within a catalyst support such as mesoporous carbon, and the catalyst support supporting the particles is coated with the ionomer to form the electrode catalyst (for example, Patent Literature 1).

In addition, there is a report that the catalytic activity of the oxygen reduction reaction is improved by ordered structure of the catalyst metal. For example, Patent Literature 1 reports that, in a case where the catalyst metal is an alloy of platinum and cobalt, when an L1₀ phase, which is one of the ordered structures of the catalyst metal, is formed, the catalytic activity of an electrode catalyst including the catalyst metal is improved. That is, when the catalyst metal having the L1₀ phase is an alloy represented by the chemical formula "L1₀-PtCo", platinum atoms and cobalt atoms are strongly bonded to each other in the c-axis direction of the crystal, and the c-axis length is shorter than that in a disordered structure. Therefore, a lattice strain effect occurs, and the electronic state of platinum changes, so that the catalytic activity of the electrode catalyst is improved.

Furthermore, Non-Patent Literature 1 reports that doping a catalyst metal represented by the chemical formula "L1₀-PtNi" with cobalt (Co) improves the catalytic activity of an electrode catalyst including the catalyst metal.

### Citation List

### Patent Literature

PTL 1: International Publication No. WO 2022/196404

### Non-Patent Literature

Non-PTL 1: Advanced Energy Materials, 9(17), 1803771. (2019)

### Summary of Invention

### Technical Problem

As an example, an object of the present disclosure is to provide an electrode catalyst capable of improving the catalytic activity of a catalyst metal supported within a mesoporous material as compared with conventional technology.

### Solution to Problem

In order to solve the above problem, an electrode catalyst according to an aspect of the present disclosure includes: a mesoporous material; and catalyst metal particles supported at least within the mesoporous material and including platinum and a metal different from platinum, wherein the mesoporous material has mesopores with a mode radius of greater than or equal to 1 nm and less than or equal to 25 nm and a pore volume of greater than or equal to 1.0 cm³/g and less than or equal to 3.0 cm³/g, the catalyst metal is represented by the chemical formula PtₓCo_{1-y}Ni_{y}, where x is greater than or equal to 1 and less than or equal to 3 and y is greater than or equal to 0.20 and less than or equal to 0.47, and the catalyst metal particles include an L1₀ phase.

### Advantageous Effects of Invention

The electrode catalyst according to one aspect of the present disclosure exhibits an effect that the catalytic activity of the catalyst metal supported within the mesoporous material can be improved more than before.

### Brief Description of Drawings

[Fig. 1A] Fig. 1A is a schematic diagram of an L1₀ structure (binary system) in which catalyst metals (platinum and cobalt) are regularly arranged.
[Fig. 1B] Fig. 1B is a schematic diagram of an L1₀ structure (ternary system) in which catalyst metals (platinum, cobalt, and nickel) are regularly arranged.
[Fig. 2] Fig. 2 is a diagram illustrating an example of an electrode catalyst according to an embodiment of the present disclosure.
[Fig. 3] Fig. 3 is a diagram illustrating an example of an X-ray diffraction (XRD) pattern of an electrode catalyst in Experimental Examples 1 to 10 and Comparative Examples 1 to 4 of the present disclosure.
[Fig. 4] Fig. 4 is a diagram illustrating an example of catalytic activity of the electrode catalysts of Experimental Examples 1 to 10 and Comparative Examples 1 to 4 of the present disclosure.

### Description of Embodiments

In order to reduce material cost by reducing the amount of platinum used in an electrode catalyst for the spread and expansion of PEFC, it is necessary to further improve the catalytic activity of the electrode catalyst. Therefore, as one method, the present inventors have studied combining a mesoporous material such as mesoporous carbon with a catalyst metal having excellent catalytic activity in order to suppress poisoning of the catalyst metal by the ionomer.

However, Patent Literature 1 discloses the relationship between the regularity of the catalyst metal represented by the chemical formula "L1₀-PtCo" and the catalytic activity of the electrode catalyst including the catalyst metal; however, the catalyst metal represented by the chemical formula "L1₀-PtCo_{1-y}Ni_{y}" has not been studied therein.

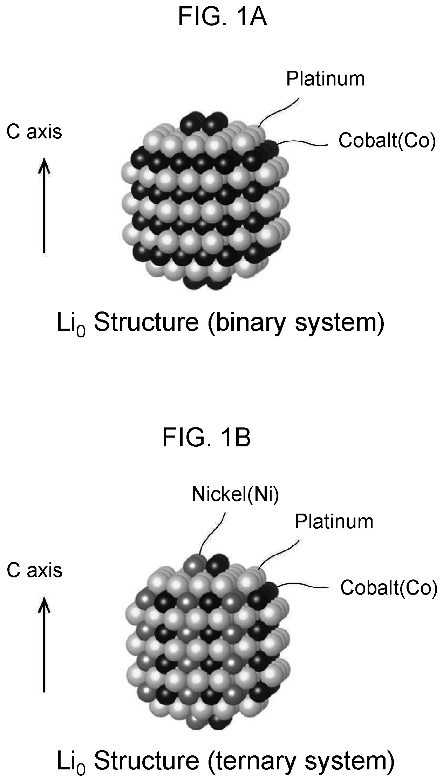

Here, the catalyst metal represented by the chemical formula "L1₀-PtCo" has a structure in which a layer containing cobalt (Co) and a layer containing platinum (Pt) are alternately laminated as shown in Fig. 1A, whereas the catalyst metal represented by the chemical formula "L1₀-PtCo_{1-y}Ni_{y}" has a structure in which nickel (Ni) is located in the same layer as cobalt (Co) and a layer containing platinum (Pt) and a layer containing nickel (Ni) and cobalt (Co) are alternately laminated as shown in Fig. 1B. Then, in a catalyst including the catalyst metal represented by the chemical formula "L1₀-PtCo_{1-y}Ni_{y}", it is considered that the catalytic activity can be further improved as compared with a catalyst including the catalyst metal represented by the chemical formula "L1₀-PtCo" by adding cobalt (Co) and appropriately adjusting the c-axis length of nickel (Ni) and the lattice strain effect of nickel (Ni).

The catalyst metal particles disclosed in Non-Patent Literature 1 are not particles supported within a mesoporous material. Here, since the growth of the catalyst metal particles supported within the mesoporous material is limited by the pore diameter and the pore shape of the mesoporous material, there is a high possibility that the shape of the catalyst metal particles and the distance between metal atoms in the catalyst metal particles are different from those of the catalyst metal supported on a support material other than the mesoporous material. That is, in the invention described in Non-Patent Literature 1, the catalytic activity of an electrode catalyst that is supported within a mesoporous material and includes a catalyst metal represented by the chemical formula "L1₀-PtCo_{1-y}Ni_{y}" has not been sufficiently studied.

Therefore, the present inventors focused on the relationship between the catalytic activity of an electrode catalyst including a catalyst metal supported within a mesoporous material and represented by the chemical formula "L1₀-PtCo_{1-y}Ni_{y}" and the composition ratio (y) of nickel in the catalyst metal. Then, the present inventors have found that the catalytic activity of the electrode catalyst can be improved by setting the composition ratio (y) of nickel in the catalyst metal supported within the mesoporous material to greater than or equal to 0.20 and less than or equal to 0.47, and have arrived at the following aspect of the present disclosure.

That is, an electrode catalyst of a first aspect of the present disclosure includes: a mesoporous material; and catalyst metal particles supported at least within the mesoporous material and including platinum and a metal different from platinum, wherein the mesoporous material has mesopores with a mode radius of greater than or equal to 1 nm and less than or equal to 25 nm and a pore volume of greater than or equal to 1.0 cm³/g and less than or equal to 3.0 cm³/g, the catalyst metal is represented by the chemical formula PtₓCo_{1-y}Ni_{y}, where x is greater than or equal to 1 and less than or equal to 3 and y is greater than or equal to 0.20 and less than or equal to 0.47, and the catalyst metal particles include an L1₀ phase.

According to such a configuration, the electrode catalyst of the present aspect can improve the catalytic activity of the catalyst metal supported within the mesoporous material more than before. Specifically, it was found that when the composition ratio (y) of nickel in the catalyst metal supported within the mesoporous material is greater than or equal to 0.20 and less than or equal to 0.47, the catalytic activity of the particles of the catalyst metal (hereinafter, referred to as catalyst metal particles) including the L1₀ phase can be appropriately improved by the synergistic effect of two factors, namely, the type of the catalyst support (mesoporous material) and the composition ratio (y) of nickel in the catalyst metal. The details will be described later.

In addition, in the electrode catalyst of the present aspect, since the catalyst metal particles are supported within the mesoporous material, even when the electrode catalyst layer is formed using an ionomer, it is possible to appropriately suppress contact between the catalyst metal particles and the ionomer.

As described above, for example, when a fuel cell is produced using the electrode catalyst of the present aspect, the fuel cell can obtain high power generation performance.

An electrode catalyst according to a second aspect of the present disclosure is the electrode catalyst according to the first aspect, wherein a mode radius of mesopores of the mesoporous material may be greater than or equal to 3 nm and less than or equal to 6 nm.

According to such a configuration, in the electrode catalyst of the present aspect, since the mode radius of the mesopores is smaller than that in a case where the mode radius of the mesopores is larger than 6 nm, it is possible to suppress infiltration of the ionomer into the mesopores of the mesoporous material.

In addition, in the electrode catalyst of the present aspect, since the mode radius of the mesopores is larger than that in a case where the mode radius of the mesopores is less than 3 nm, it is possible to efficiently supply the reaction gas to the catalyst metal particles within the mesoporous material. Furthermore, in the electrode catalyst of the present aspect, the catalyst metal particles can be appropriately supported in the mesopores as compared with a case where the mode radius of the mesopores is less than 3 nm. As a result, poisoning of the catalyst metal by the ionomer can be reduced, and a decrease in the catalytic activity of the electrode catalyst can be suppressed.

In an electrode catalyst according to a third aspect of the present disclosure, the mesoporous material in the electrode catalyst according to the first aspect or the second aspect may be mesoporous carbon.

According to such a configuration, the electrode catalyst of the present aspect is excellent in conductivity and water repellency because the main constituent element of the mesoporous material is carbon. Therefore, for example, when a fuel cell is produced using the electrode catalyst of the present aspect, the fuel cell can obtain high power generation performance.

Hereinafter, specific examples of the above aspects of the present disclosure will be described with reference to the accompanying drawings. Each of the specific examples described below shows an example of the above-described aspects of the present disclosure. Therefore, the following shapes, numerical values, constituent elements, arrangement positions of the constituent elements, and the like do not limit the scope of the claims unless described in the claims.

Among the components described below, components not recited in any one of the independent claims defining the broadest concepts of the present disclosure are described as optional components. In addition, in the drawings, the description of components denoted by the same reference numerals may be omitted. The drawings schematically illustrate components for easy understanding, and shapes, dimensional ratios, and the like may not be accurately illustrated.

### [Embodiments]

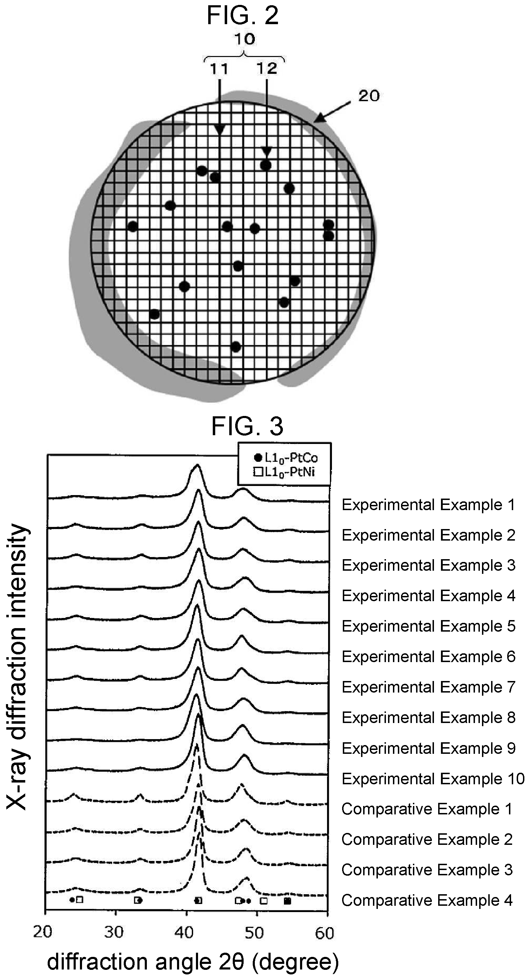

Fig. 2 is a diagram illustrating an example of an electrode catalyst according to an embodiment.

As shown in Fig. 2, the electrode catalyst 10 includes a mesoporous material 11 and catalyst metal particles 12 (hereinafter referred to as catalyst metal particles 12). The electrode catalyst 10 may be used to catalyze an oxygen reduction reaction (ORR), an oxygen evolution reaction (OER), a formic acid oxidation reaction (FAOR), a methanol oxidation reaction (MOR), an ethanol oxidation reaction (EOR), or the like.

The electrode catalyst 10 can be used in, for example, a fuel cell or a metal-air battery. Examples of the fuel cell include, for example, a polymer electrolyte fuel cell (PEFC), a direct formic acid fuel cell, a direct methanol fuel cell (DMFC), and a direct ethanol fuel cell.

As shown in Fig. 2, an electrode catalyst layer of the above-described electrochemical device may include the electrode catalyst 10 and an ionomer 20.

### (Mesoporous Material)

Hereinafter, as an example of the mesoporous material 11 of the electrode catalyst 10, mesoporous carbon will be described as necessary, but the mesoporous material 11 is not limited to mesoporous carbon. Other materials may be used as long as the mode radius of the mesoporous material 11 and the pore volume of the mesoporous material 11 are the same. Examples of the mesoporous material 11 other than mesoporous carbon include, for example, materials composed of oxides of titanium, tin, niobium, tantalum, zirconium, aluminum, silicon, and the like.

The mesoporous material 11 desirably has a pore volume of the mesopores of greater than or equal to 1.0 cm³/g and less than or equal to 3.0 cm³/g for the following reason.

When the pore volume of the mesopores of the mesoporous material 11 is greater than or equal to 1.0 cm³/g, a large amount of the catalyst metal particles 12 can be easily supported within the mesoporous material 11 as compared with a case where the pore volume of the mesopores is less than 1.0 cm³/g. When the pore volume of the mesopores of the mesoporous material 11 is less than or equal to 3.0 cm³/g, the strength of the mesoporous material 11 as a structure can be improved as compared with a case where the pore volume of the mesopores is more than 3.0 cm³/g.

In the mesoporous material 11, the mode radius of the mesopores may be greater than or equal to 1 nm and less than or equal to 25 nm, and the mode radius of the mesopores is suitably greater than or equal to 3 nm and less than or equal to 6 nm for the following reasons. The "mode radius" means the most frequent diameter (diameter at the maximum value) in the pore size distribution of the mesoporous material 11.

When the mode radius of the mesopores of the mesoporous material 11 is greater than or equal to 3 nm, the reaction gas is more easily supplied into the mesopores than when the mode radius of the mesopores is less than 3 nm. When the mode radius of the mesopores of the mesoporous material 11 is less than or equal to 6 nm, the ionomer 20 is less likely to penetrate into the mesopores than when the mode radius of the mesopores is more than 6 nm.

Here, "the mode radius of the mesopores is greater than or equal to 1 nm and less than or equal to 25 nm (desirably greater than or equal to 3 nm and less than or equal to 6nm), and the pore volume of the mesopores is greater than or equal to 1.0 cm³/g and less than or equal to 3.0 cm³/g" means values satisfied in the mesopores of the mesoporous material 11 before the catalyst metal particles 12 are supported on the mesoporous material 11.

The pore volume and the mode radius of the mesopores of the mesoporous material 11 can be measured by a nitrogen adsorption method and derived by analysis using a method such as a Barrett-Joyner-Halenda (BJH) method, a density functional theory (DFT) method, or a quenched solid density functional theory (QSDFT) method.

Further, the mesoporous material 11 may have an average particle diameter of greater than or equal to 200 nm. The "average particle diameter" means the median diameter (d50) of the particle size distribution of the mesoporous material 11.

When the average particle diameter of the mesoporous material 11 is greater than or equal to 200 nm, the ratio of the catalyst metal particles 12 affected by poisoning by the ionomer 20 can be reduced as compared with a case where the average particle diameter is less than 200 nm. Then, the catalytic activity of the electrode catalyst can be improved.

The mesoporous material 11 may have an average particle diameter of less than or equal to 1000 nm. When the average particle diameter of the mesoporous material 11 is less than or equal to 1000 nm, the reaction gas is more easily supplied to the catalyst metal particles 12 supported within the mesoporous material 11 than when the average particle diameter is more than 1000 nm.

The average particle diameter of the mesoporous material 11 may be measured using a laser diffraction particle size distribution analyzer or the like in a state where the mesoporous material 11 is dispersed in a solvent, or may be measured using an image of a scanning electron microscope (SEM) or a transmission electron microscope (TEM). When the particle size distribution is measured by dispersing the mesoporous material 11 in a solvent, it is necessary to prevent particles of the mesoporous material 11 from aggregating with each other. As the solvent, water, alcohol, or a mixed solvent of water and alcohol can be used.

In order to further enhance the dispersibility of the mesoporous material 11, it is appropriate to add a dispersant to the solvent. As the dispersant, for example, a perfluorosulfonic acid resin, poly(oxyethylene) octylphenyl ether, polyoxyethylene sorbitan monolaurate, or the like can be used.

In order to further enhance the dispersibility of the mesoporous material 11, it is appropriate to perform a dispersion treatment after mixing the solvent and the mesoporous material. Examples of the dispersion treatment apparatus include, for example, an ultrasonic homogenizer, a wet jet mill, a ball mill, and a mechanical stirring apparatus.

A method for producing the mesoporous material 11 as described above is not particularly limited, and for example, a method described in Japanese Patent Unexamined Publication No. 2010-208887 can be used. The mesoporous material 11 produced by such a method has a structure in which the pore volume of the mesopores is large and the mesopores communicate with each other. Therefore, the catalyst metal particles 12 are easily supported in the pores, and the reaction gas is easily supplied to the supported catalyst metal particles 12.

In order to adjust the average particle diameter of the mesoporous material 11, a pulverization treatment may be performed after synthesis. Examples of the pulverization method include a wet bead mill, a dry bead mill, a wet ball mill, a dry ball mill, a wet jet mill, and a dry jet mill. Among them, a wet bead mill is suitably used because it is easy to pulverize to a fine particle diameter.

### (Catalyst Metal Particles)

The catalyst metal particles 12 include platinum and a metal different from platinum, supported at least within the mesoporous material 11. Specifically, the catalyst metal is represented by the chemical formula PtₓCo_{1-y}Ni_{y}, and a range of x of the catalyst metal is greater than or equal to 1 and less than or equal to 3, and a range of y is greater than or equal to 0.20 and less than or equal to 0.47. The catalyst metal particles 12 include an L1₀ phase. An alloy of platinum with cobalt and nickel is suitable because it has high catalytic activity for the oxygen reduction reaction (ORR) and has good durability in a power generation environment of a fuel cell.

### (Ionomer)

An ion exchange resin can be used as the ionomer 20 (proton conductive resin). Among them, a perfluorosulfonic acid resin is suitable because it has high proton conductivity and stably exists even in a power generation environment of a fuel cell. The ion exchange capacity of the ion exchange resin may be greater than or equal to 0.9 meq/g dry resin and less than or equal to 2.0 meq/g dry resin. When the ion exchange capacity is greater than or equal to 0.9 meq/g dry resin, high proton conductivity is easily obtained as compared with a case where the ion exchange capacity is less than 0.9 meq/g dry resin. When the ion exchange capacity is less than or equal to 2.0 meq/g dry resin, swelling of the resin due to water absorption is suppressed and gas diffusibility in the electrode catalyst layer is less likely to be inhibited as compared with a case where the ion exchange capacity is more than 2.0 meq/g dry resin. The weight ratio of the ionomer 20 to a total weight of the mesoporous material 11 and a water-repellent material that are included in the electrode catalyst layer is suitably 0.2 to 2.0.

(Synthesis Method "A" of Platinum-Cobalt Alloy-Supported Mesoporous Carbon) First, a synthesis method "A" of an electrode catalyst in a case where the catalyst metal is an alloy of platinum and cobalt will be described.

As the mesoporous material, commercially available mesoporous carbon "CNovel (trademark)" manufactured by Toyo Tanso Co., Ltd., having a design pore diameter of 10 nm, was used. This mesoporous carbon was put into a mixed solvent containing equal amounts of water and ethanol to prepare a slurry having a solid content concentration of 1 wt%. Zirconia beads having a diameter of 0.5 mm were put into this slurry, and a pulverization treatment was performed for 20 minutes under a condition of a peripheral speed of 12 m/s using a media-stirring wet bead mill (manufactured by Ashizawa Finetech Ltd., Labstar (trademark) Mini). The zirconia beads were taken out from the slurry after the pulverization treatment, the solvent was evaporated, and then the obtained aggregate was ground in a mortar to prepare a carbon support (mesoporous material 11).

1 g of the carbon support prepared above was put into 400 mL of a mixed solvent of water : ethanol = 1 : 1 (weight ratio), and ultrasonic dispersion was performed for 15 minutes. After dispersion, a 14 wt% nitric acid solution of dinitrodiammine-platinum was added dropwise with stirring under a nitrogen atmosphere so that platinum was 50 wt% with respect to the carbon support, and the mixture was heated and stirred at 80°C for 6 hours. After cooling, the mixture was filtered and washed, and dried at 80°C for 15 hours.

The aggregate obtained above was ground in a mortar and subjected to a heat treatment at 220°C for 2 hours in an atmosphere of nitrogen : hydrogen = 85 : 15 to prepare platinum-supported mesoporous carbon (hereinafter referred to as "Pt/MPC").

0.3 g of the Pt/MPC prepared above was put into a conical beaker and allowed to stand at 30°C/90% RH (relative humidity (RH)) for 12 hours to adsorb water vapor on the Pt/MPC (water vapor adsorption treatment step).

Next, 50 mL of pure water in which cobalt chloride hexahydrate was dissolved in an amount such that a molar ratio of cobalt to a total amount of platinum and cobalt became a predetermined amount was put into the conical beaker containing Pt/MPC. After ultrasonic dispersion treatment was performed for 15 minutes, 50 mL of a 1 wt% sodium borohydride aqueous solution was slowly added dropwise, and then the mixture was stirred at room temperature for 10 minutes to reduce cobalt. This was filtered and washed, and dried at 80°C for 15 hours. The resulting powder was ground in a mortar, sealed in an alumina crucible, and heat-treated under a reducing atmosphere. Specifically, the alumina crucible containing the powder was introduced into a Tamman tube type atmosphere electric furnace (S6T-2035D, manufactured by Motoyama Co., Ltd.), and first, the temperature was raised from room temperature to 120°C over 10 minutes, and then held at the same temperature for 60 minutes. Thereafter, the temperature was raised to 1000°C at a rate of 150°C/hour and maintained at the same temperature for 30 minutes. Then, the temperature was raised to 1100°C at a rate of 100°C/hour and maintained at the same temperature for 2 hours. Thereafter, the temperature was lowered to 1000°C at a rate of 100°C/hour, and the temperature was maintained for 30 minutes. Then, the temperature was lowered to room temperature at a rate of 150°C/hour. During that time, a nitrogen-hydrogen mixed gas of nitrogen : hydrogen = 97 : 3 was passed through the tube at a flow rate of 1 L/min to maintain a reducing atmosphere.

The powder obtained above was stirred in 100 mL of a 0.2 mol/L sulfuric acid aqueous solution at 80°C for 2 hours, filtered and washed, and then stirred in 100 mL of a 0.2 mol/L nitric acid aqueous solution at 70°C for 2 hours to dissolve excess cobalt on the outermost surface in advance. This was filtered and washed, and dried at 80°C for 15 hours. The resulting powder was ground in a mortar, sealed in an alumina crucible, and heat-treated under a reducing atmosphere. Specifically, the alumina crucible containing the powder was introduced into an atmosphere tubular electric furnace, and first, the temperature was raised from room temperature to 120°C over 10 minutes, and then held at the same temperature for 60 minutes. Thereafter, the temperature was raised to 400°C at a rate of 300°C/hour and maintained at the same temperature for 2 hours. Thereafter, the temperature was lowered to 200°C at a rate of 150°C/hour, and then lowered to room temperature at a rate of 300°C/hour. During that time, 100% hydrogen gas was passed through the tube at a flow rate of 2 L/min to maintain a reducing atmosphere.

Thus, platinum-cobalt alloy-supported mesoporous carbon (hereinafter referred to as "PtCo/MPC") was prepared.

### (Synthesis Method "B" of Platinum-Cobalt-Nickel Alloy-Supported Mesoporous Carbon)

Next, a synthesis method "B" of an electrode catalyst in a case where the catalyst metal is an alloy of platinum, cobalt, and nickel will be described.

The synthesis method "B" of platinum-cobalt-nickel alloy-supported mesoporous carbon is the same as the synthesis method "A" except that nickel chloride hexahydrate is used as a precursor in addition to cobalt chloride hexahydrate, and a molar ratio of a total of cobalt and nickel to a total amount of platinum, cobalt, and nickel is set to a predetermined amount.

(Method for Calculating Ratio of Metal Elements Contained in Electrode Catalyst) The element ratios of platinum and a metal different from platinum, contained in the electrode catalyst, were measured by the following method.

First, the electrode catalyst was weighed in a quartz beaker and heated in an electric furnace to burn carbon. The material after cooling was heated in the beaker with a small amount of nitric acid and hydrochloric acid added, diluted with pure water, and then introduced into an inductively coupled plasma-optical emission spectroscopy (ICP-OES) analyzer ("ICP-OES 710" manufactured by Agilent Technologies, Inc.) to perform quantitative analysis of platinum and a metal different from platinum. Thus, the element ratios of platinum and a metal different from platinum contained in the electrode catalyst were calculated.

### [EXPERIMENTAL EXAMPLES]

Hereinafter, Experimental Examples 1 to 10 in which mesoporous carbon (MPC) was used as a catalyst support for supporting a catalyst metal will be described.

### [EXPERIMENTAL EXAMPLE 1]

The electrode catalyst of Experimental Example 1 was synthesized by the synthesis method "A" in which 50 mL of pure water in which cobalt chloride hexahydrate was dissolved in an amount such that the molar ratio of cobalt to the total amount of platinum and cobalt was 0.55 was put into the conical beaker containing Pt/MPC.

When the composition of the catalyst metal in the electrode catalyst of Experimental Example 1 is represented by the chemical formula "L1₀-PtₓCo_{1-y}Ni_{y}", x was 2.03 and y was 0.00.

### [EXPERIMENTAL EXAMPLE 2]

The electrode catalyst of Experimental Example 2 was synthesized by the synthesis method "B" in which 50 mL of pure water in which cobalt chloride hexahydrate and nickel chloride hexahydrate were dissolved in amounts such that the molar ratio of the sum of cobalt and nickel to the total amount of platinum, cobalt, and nickel was 0.55 was put into the conical beaker containing Pt/MPC.

When the composition of the catalyst metal in the electrode catalyst of Experimental Example 2 is represented by the chemical formula "L1₀-PtₓCo_{1-y}Ni_{y}", x was 1.85 and y was 0.08.

### [EXPERIMENTAL EXAMPLE 3]

The electrode catalyst of Experimental Example 3 was produced in the same manner as the electrode catalyst of Experimental Example 2 except for the ratio of cobalt chloride hexahydrate to nickel chloride hexahydrate used as precursors.

When the composition of the catalyst metal in the electrode catalyst of Experimental Example 3 is represented by the chemical formula "L1₀-PtₓCo_{1-y}Ni_{y}", x was 1.85 and y was 0.20.

### [EXPERIMENTAL EXAMPLE 4]

The electrode catalyst of Experimental Example 4 was produced in the same manner as the electrode catalyst of Experimental Example 2 except for the ratio of cobalt chloride hexahydrate to nickel chloride hexahydrate used as precursors.

When the composition of the catalyst metal in the electrode catalyst of Experimental Example 4 is represented by the chemical formula "L1₀-PtₓCo_{1-y}Ni_{y}", x was 1.68 and y was 0.30.

### [EXPERIMENTAL EXAMPLE 5]

The electrode catalyst of Experimental Example 5 was produced in the same manner as the electrode catalyst of Experimental Example 2 except for the ratio of cobalt chloride hexahydrate to nickel chloride hexahydrate used as precursors.

When the composition of the catalyst metal in the electrode catalyst of Experimental Example 5 is represented by the chemical formula "L1₀-PtₓCo_{1-y}Ni_{y}", x was 1.95 and y was 0.35.

### [EXPERIMENTAL EXAMPLE 6]

The electrode catalyst of Experimental Example 6 was produced in the same manner as the electrode catalyst of Experimental Example 2 except for the ratio of cobalt chloride hexahydrate to nickel chloride hexahydrate used as precursors.

When the composition of the catalyst metal in the electrode catalyst of Experimental Example 6 is represented by the chemical formula "L1₀-PtₓCo_{1-y}Ni_{y}", x was 2.07 and y was 0.41.

### [EXPERIMENTAL EXAMPLE 7]

The electrode catalyst of Experimental Example 7 was produced in the same manner as the electrode catalyst of Experimental Example 2 except for the ratio of cobalt chloride hexahydrate to nickel chloride hexahydrate used as precursors.

When the composition of the catalyst metal in the electrode catalyst of Experimental Example 7 is represented by the chemical formula "L1₀-PtₓCo_{1-y}Ni_{y}", x was 1.92 and y was 0.43.

### [EXPERIMENTAL EXAMPLE 8]

The electrode catalyst of Experimental Example 8 was produced in the same manner as the electrode catalyst of Experimental Example 2 except for the ratio of cobalt chloride hexahydrate to nickel chloride hexahydrate used as precursors.

When the composition of the catalyst metal in the electrode catalyst of Experimental Example 8 is represented by the chemical formula "L1₀-PtₓCo_{1-y}Ni_{y}", x was 1.66 and y was 0.47.

### [EXPERIMENTAL EXAMPLE 9]

The electrode catalyst of Experimental Example 9 was produced in the same manner as the electrode catalyst of Experimental Example 2 except for the ratio of cobalt chloride hexahydrate to nickel chloride hexahydrate used as precursors.

When the composition of the catalyst metal in the electrode catalyst of Experimental Example 9 is represented by the chemical formula "L1₀-PtₓCo_{1-y}Ni_{y}", x was 1.56 and y was 0.64.

### [EXPERIMENTAL EXAMPLE 10]

The electrode catalyst of Experimental Example 10 was produced in the same manner as the electrode catalyst of Experimental Example 2 except for the ratio of cobalt chloride hexahydrate to nickel chloride hexahydrate used as precursors.

When the composition of the catalyst metal in the electrode catalyst of Experimental Example 10 is represented by the chemical formula "L1₀-PtₓCo_{1-y}Ni_{y}", x was 1.70 and y was 0.70.

### [COMPARATIVE EXAMPLES]

Hereinafter, Comparative Examples 1 to 4 in which carbon black (KB) was used as a catalyst support for supporting a catalyst metal will be described.

### [COMPARATIVE EXAMPLE 1]

The electrode catalyst of Comparative Example 1 was prepared in the same manner as the electrode catalyst of Experimental Example 1, except that carbon black was used as a catalyst support for supporting a catalyst metal, to prepare platinum-cobalt alloy-supported carbon black (hereinafter referred to as "PtCo/KB"). Specifically, a commercially available platinum-supported carbon black catalyst (TEC10E50E manufactured by Tanaka Kikinzoku Kogyo Co., Ltd.) was used instead of Pt/MPC subjected to the water vapor adsorption treatment.

When the composition of the catalyst metal in the electrode catalyst of Comparative Example 1 is represented by the chemical formula "L1₀-PtₓCo_{1-y}Ni_{y}", x was 1.53 and y was 0.00.

### [COMPARATIVE EXAMPLE 2]

Platinum-cobalt-nickel alloy-supported carbon black was prepared in the same manner as the electrode catalyst of Experimental Example 2 except that carbon black was used as a catalyst support for supporting a catalyst metal. Specifically, a commercially available platinum-supported carbon black catalyst (TEC10E50E manufactured by Tanaka Kikinzoku Kogyo Co., Ltd.) was used instead of Pt/MPC subjected to the water vapor adsorption treatment.

When the composition of the catalyst metal in the electrode catalyst of Comparative Example 2 is represented by the chemical formula "L1₀-PtₓCo_{1-y}Ni_{y}", x was 1.26 and y was 0.19.

### [COMPARATIVE EXAMPLE 3]

The electrode catalyst of Comparative Example 3 was produced in the same manner as the electrode catalyst of Comparative Example 2 except for the ratio of cobalt chloride hexahydrate to nickel chloride hexahydrate used as precursors.

When the composition of the catalyst metal in the electrode catalyst of Comparative Example 3 is represented by the chemical formula "L1₀-PtₓCo_{1-y}Ni_{y}", x was 1.22 and y was 0.33.

### [COMPARATIVE EXAMPLE 4]

The electrode catalyst of Comparative Example 4 was produced in the same manner as the electrode catalyst of Comparative Example 2 except for the ratio of cobalt chloride hexahydrate to nickel chloride hexahydrate used as precursors.

When the composition of the catalyst metal in the electrode catalyst of Comparative Example 4 is represented by the chemical formula "L1₀-PtₓCo_{1-y}Ni_{y}", x was 1.16 and y was 0.46.

### (Evaluation of L1₀ Structure in Electrode Catalysts of Experimental Examples 1 to 10 and Comparative Examples 1 to 4)

The electrode catalysts of Experimental Examples 1 to 10 and Comparative Examples 1 to 4 were evaluated as follows.

### [Calculation of Ratio R of L1₀ Structure]

The ratio R of the L1₀ structure in the catalyst metal particles 12 of each of the electrode catalysts of Experimental Examples 1 to 10 and Comparative Examples 1 to 4 was calculated by the following formula (1) by performing the following X-ray diffraction measurement and fitting processing on an XRD pattern.

For measurement of X-ray diffraction (X-ray Diffraction; hereinafter, XRD), X'pert Pro MPD manufactured by PANalytical Co., Ltd. was used.

First, the catalyst powder was spread over a sample holder having a ground recessed portion so that the surface of the catalyst powder was aligned flush with the surface of the sample holder, and then the sample holder was set in the apparatus. The incident light was CuKα, a one-dimensional semiconductor detector was used as a detector, and 2θ-θ measurement was performed in a range of 2θ = 20° to 60° with a focusing optical system.

Fig. 3 is a diagram illustrating an example of XRD patterns of electrode catalysts of Experimental Examples 1 to 10 and Comparative Examples 1 to 4. A fitting process was performed on each of the XRD patterns of Fig. 3 in the following procedure.

First, the pybeads library of Python, which is a programming language, was used for background subtraction of data.

Then, the background-subtracted data curve was subjected to multi-peak fitting in the range of 30° to 60° using the lmfit library of Python. At this time, a symmetric pseudo-Voigt function was used as the shape of each peak.

Here, the peak at 2θ = 40° to 45° corresponds to an L1₀ structure (111) diffraction peak, and the peak at 2θ = 30° to 35° corresponds to an L1₀ structure (110) diffraction peak. Then, when the areas of these diffraction peaks are expressed as "S111" and "S110", respectively, the ratio R of the L1₀ structure in the catalyst metal particles 12 (hereinafter, L1₀ ratio R) can be determined by the following formula (1).
[Math. 1] $R = \sqrt{\frac{{S}_{110} / {S}_{111}}{{S}_{110 _ thr} / {S}_{111 _ thr}}}$ (1)

In Formula (1), "S110_thr" and "S111_thr" are theoretical intensities of a (110) diffraction peak and a (111) diffraction peak in the L1₀ structure, respectively, and a ratio thereof is 0.253 according to a diffraction intensity simulation using software VESTA capable of simulating X-ray diffraction. Since the denominator of Formula (1) theoretically does not exceed 0.253, the L1₀ ratio R of Formula (1) takes an appropriate value of less than or equal to "1" according to the abundance ratio of the L1₀ structure in the catalyst metal particles 12.

### [Diffraction Angle of Diffraction Peak by Simulation]

In Fig. 3, diffraction angles (2θ) of diffraction peaks obtained by simulation using VESTA based on structural data of "L1₀-PtCo" and "L1₀-PtNi" obtained from an inorganic crystal structure database (ICSD) are shown by black circles (filled circles) and white squares (open squares), respectively.

### [Results]

As shown in Table 1 (below), the L1₀ ratio R in the catalyst metal particles 12 of each of the electrode catalysts of Experimental Examples 1 to 10 and Comparative Examples 1 to 4 was a value of greater than or equal to "0.24", and it was found that these catalyst metal particles 12 all include an L1₀ phase.

In addition, as shown in Fig. 3, in the XRD pattern of the catalyst metal particles 12 of each of the electrode catalysts of Experimental Examples 1 to 10 and Comparative Examples 1 to 4, a diffraction peak corresponding to the diffraction angle (black circle) of "L1₀-PtCo" obtained by the simulation and a diffraction peak corresponding to the diffraction angle (white square) of "L1₀-PtNi" obtained by the simulation were observed. In particular, a diffraction peak at a diffraction angle between 30° and 40° is a peak derived only from an ordered alloy having the L1₀ structure, and such a diffraction peak was clearly observed in the XRD pattern of Fig. 3.

In the vicinity of a diffraction angle slightly larger than 50° (white square mark) and in the vicinity of a diffraction angle slightly smaller than 50° (black circle mark), clear diffraction peaks corresponding to these diffraction angles were not confirmed in the XRD pattern of Fig. 3. The reason for this is as follows.

The electrode catalysts synthesized in Experimental Examples 1 to 10 and Comparative Examples 1 to 4 are solid solutions of an alloy represented by "L1₀-PtCo" and an alloy represented by "L1₀-PtNi". Therefore, it is considered that the position of the diffraction peak exists between the vicinity (white square mark) where the diffraction angle is slightly larger than 50° and the vicinity (black circle mark) where the diffraction angle is slightly smaller than 50°. In addition, in each of the electrode catalysts synthesized in Experimental Examples 1 to 10 and Comparative Examples 1 to 4, since the composition ratio of cobalt (Co) and nickel (Ni) in the solid solution is changed, it is considered that the position of the diffraction peak shifts little by little for each of the electrode catalysts synthesized in Experimental Examples 1 to 10 and Comparative Examples 1 to 4. Actually, when the XRD pattern of Fig. 3 is checked, an asymmetric right shoulder portion is recognized in a peak of the XRD pattern in the vicinity of a diffraction angle of 50°, and it is considered that the asymmetric right shoulder portion is derived from a diffraction peak present between the vicinity of a diffraction angle slightly larger than 50° (white square mark) and the vicinity of a diffraction angle slightly smaller than 50° (black circle mark).

As described above, the XRD pattern of Fig. 3 is data indicating that the electrode catalysts synthesized in Experimental Examples 1 to 10 and Comparative Examples 1 to 4 indicate formation of "L1₀-PtₓCo_{1-y}Ni_{y}" in the catalyst metal particles 12.

### (Evaluation of Activity of Electrode Catalysts of Experimental Examples 1 to 10 and Comparative Examples 1 to 4)

In order to evaluate performance of each of the electrode catalysts of Experimental Examples 1 to 10 and Comparative Examples 1 to 4, a ring-disk electrode (RDE) including an electrode catalyst layer containing each of these electrode catalysts was produced as follows.

### [Ink Preparation]

A sample (5.0 mg) of each of the electrode catalysts of Experimental Examples 1 to 10 and Comparative Examples 1 to 4 was mixed with 7.92 µL of an ionomer, 11.36 mL of pure water, and 8.87 mL of isopropanol (IPA), and sonicated for 30 minutes with an ultrasonic homogenizer (Digital Sonifier SFX 550 manufactured by Branson) before use. The catalyst ink thus obtained was applied to the following glassy carbon disk.

### [Evaluation Apparatus]

For electrochemical measurement, a potentiostat (ALS760E electrochemical analyzer manufactured by BAS Inc.), an electrode rotator and a standard three-electrode glass cell (each manufactured by BAS Inc.), and a rotating ring-disk electrode (RRDE) device (RRDE-3A manufactured by BAS Inc.) were used.

### [Measurement Method]

A catalyst-coated glassy carbon disk was used as a working electrode, a platinum-plated electrode was used as a counter electrode (CE), and a reversible hydrogen electrode (RHE) was used as a reference electrode (RE). The RE was isolated from a main cell compartment using a glass frit tube.

First, cleaning of a catalyst metal surface was performed by 50 cycles of cyclic voltammetry (CV) at 0.05 V to 1.15 V (100 mV/s) in 0.1 M HClO₄ saturated with N₂.

Next, the ORR activity of the electrode catalyst was evaluated by replacing an electrolytic solution. Specifically, three cycles of cyclic voltammetry (CV) at 0.05 V to 1.15 V (100 mV/s) in 0.1 M HClO₄ saturated with O₂ were performed, followed by linear sweep voltammetry (LSV) at 0.05 V to 1.00 V (5 mV/s) at 1600 rpm in an electrolyte saturated with O₂ to evaluate ORR activity. The mass activity (MA) of each of the electrode catalysts of Experimental Examples 1 to 10 and Comparative Examples 1 to 4 was determined by normalizing a kinetic current (ik) by a respective amount of platinum.

### [Results]

Table 1 lists a composition ratio of platinum (x = Pt/(Co+Ni)) and a composition ratio of nickel (y = Ni/(Co+Ni)) in the catalyst metal when a composition of the catalyst metal is represented by the chemical formula PtₓCo_{1-y}Ni_{y} for each of Experimental Examples 1 to 10 and Comparative Examples 1 to 4. In addition, Table 1 lists the L1₀ ratio R, catalytic activity of the electrode catalyst, and normalized catalytic activity of the electrode catalyst for each of Experimental Examples 1 to 10 and Comparative Examples 1 to 4.

The "normalized catalytic activity" is a value normalized by the catalytic activity of Experimental Example 1 (PtCo/MPC) in Experimental Examples 1 to 10 in which mesoporous carbon was used as the catalyst support for supporting the catalyst metal, and is a value normalized by the catalytic activity of Comparative Example 1 (PtCo/KB) in Comparative Examples 1 to 4 in which carbon black was used as the catalyst support for supporting the catalyst metal.

**[Table 1]**

| | **support** | **Pt/ (Co+Ni) (x)** | **Ni/ (Co+Ni) (y)** | **L1₀ Ratio (R)** | **catalytic activity (A/g-Pt)** | **normalized catalytic activity (-)** |
|---|---|---|---|---|---|---|
| Experimental Example 1 | MPC | 2.03 | 0.00 | 0.43 | 550 | 1.00 |
| Experimental Example 2 | MPC | 1.85 | 0.08 | 0.24 | 740 | 1.35 |
| Experimental Example 3 | MPC | 1.85 | 0.20 | 0.43 | 880 | 1.60 |
| Experimental Example 4 | MPC | 1.68 | 0.30 | 0.53 | 1050 | 1.91 |
| Experimental Example 5 | MPC | 1.94 | 0.35 | 0.44 | 1420 | 2.58 |
| Experimental Example 6 | MPC | 2.07 | 0.41 | 0.61 | 1190 | 2.16 |
| Experimental Example 7 | MPC | 1.92 | 0.43 | 0.42 | 1050 | 1.91 |
| Experimental Example 8 | MPC | 1.66 | 0.47 | 0.57 | 880 | 1.60 |
| Experimental Example 9 | MPC | 1.56 | 0.64 | 0.56 | 700 | 1.27 |
| Experimental Example 10 | MPC | 1.70 | 0.70 | 0.58 | 610 | 1.11 |
| Comparative Example 1 | KB | 1.53 | 0.00 | 0.57 | 510 | 1.00 |
| Comparative Example 2 | KB | 1.26 | 0.19 | 0.42 | 690 | 1.35 |
| Comparative Example 3 | KB | 1.22 | 0.33 | 0.48 | 870 | 1.71 |
| Comparative Example 4 | KB | 1.16 | 0.46 | 0.42 | 710 | 1.39 |

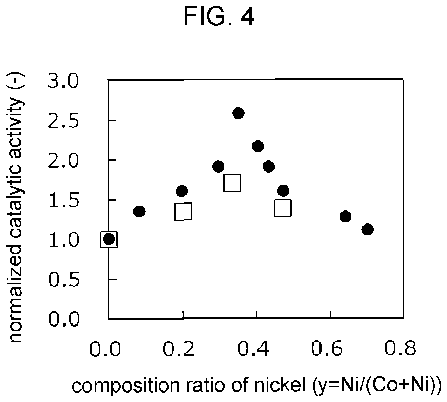

Fig. 4 shows an example of the relationship between the catalytic activity of each of the electrode catalysts of Experimental Examples 1 to 10 and Comparative Examples 1 to 4 and the range of the composition ratio (y) of nickel in the catalyst metal of each of the electrode catalysts. Specifically, a vertical axis of Fig. 4 represents the normalized catalytic activity of the electrode catalyst, and a horizontal axis of Fig. 4 represents the composition ratio (y) of nickel of the catalyst metal. In Fig. 4, data of the electrode catalysts of Experimental Examples 1 to 10 are indicated by black circles (filled circles), and data of the electrode catalysts of Comparative Examples 1 to 4 are indicated by white squares (open squares).

Based on the data of the black circles in Fig. 4, the influence of the difference in the composition ratio (y) of nickel in the catalyst metal on the catalytic activity of the electrode catalyst in the case of using mesoporous carbon as the catalyst support for supporting the catalyst metal was studied. As a result, it was found that the normalized catalytic activity of the electrode catalyst increased as the composition ratio (y) of nickel of the catalyst metal increased until the range of the composition ratio "y" of the catalyst metal reached "0.35", and then the normalized catalytic activity of the electrode catalyst turned to decrease. That is, it was found that the normalized catalytic activity of the electrode catalyst had a maximum value (2.58) when the composition ratio (y) of nickel of the catalyst metal was 0.35. In addition, it was found that the normalized catalytic activity of the electrode catalyst decreases as the composition ratio (y) of nickel of the catalyst metal increases when the range of the composition ratio (y) of nickel of the catalyst metal exceeds "0.35".

The influence of the difference in the composition ratio (y) of nickel of the catalyst metal on the catalytic activity of the electrode catalyst in the case of using carbon black as the catalyst support for supporting the catalyst metal was studied based on the data of the white squares in Fig. 4. As a result, it was found that the normalized catalytic activity of the electrode catalyst increased as the composition ratio (y) of nickel of the catalyst metal increased until the range of the composition ratio (y) of nickel of the catalyst metal reached "0.33", and then the normalized catalytic activity of the electrode catalyst turned to decrease. That is, it was found that the normalized catalytic activity of the electrode catalyst had a maximum value (1.71) when the composition ratio (y) of nickel of the catalyst metal was 0.33.

From the above examination results, it was found that the composition ratio (y) of nickel of the catalyst metal is a factor that can be involved in improvement of the catalytic activity of the electrode catalyst regardless of the type of the catalyst support for supporting the catalyst metal.

Next, a change in the catalytic activity of the electrode catalyst due to the difference in the composition ratio (y) of nickel of the catalyst metal in the case of using mesoporous carbon as the catalyst support for supporting the catalyst metal was compared with a change in the catalytic activity of the electrode catalyst due to the difference in the composition ratio (y) of nickel of the catalyst metal in the case of using carbon black as the catalyst support for supporting the catalyst metal.

Here, if it is assumed that improvement of the catalytic activity of the electrode catalyst is determined only by the composition ratio (y) of nickel of the catalyst metal, the normalized catalytic activity of the electrode catalyst in the case of using mesoporous carbon as the catalyst support for supporting the catalyst metal (black circles in Fig. 4) and the normalized catalytic activity of the electrode catalyst in the case of using carbon black as the catalyst support for supporting the catalyst metal (white squares in Fig. 4) should substantially coincide with each other. This is because it is considered that the effect of improving the catalytic activity of the electrode catalyst due to the difference in the catalyst support is offset since the normalized catalytic activities of both are respectively normalized by the data of Experimental Example 1 (PtCo/MPC) and Comparative Example 1 (PtCo/KB).

However, according to the data of the black circles and the white squares in Fig. 4, when the range of the composition ratio (y) of nickel of the catalyst metal is greater than or equal to 0.02 and less than or equal to 0.47, the normalized catalytic activity of the electrode catalyst in the case of using mesoporous carbon as the catalyst support for supporting the catalyst metal is larger than the normalized catalytic activity of the electrode catalyst in the case of using carbon black as the catalyst support for supporting the catalyst metal. This means that when the range of the composition ratio (y) of nickel of the catalyst metal is greater than or equal to 0.02 and less than or equal to 0.47, the catalytic activity of the electrode catalyst is improved by the synergistic effect of two factors of mesoporous carbon (type of catalyst support) and the composition ratio (y) of nickel of the catalyst metal.

As described above, the electrode catalyst of the present embodiment can improve the catalytic activity of the catalyst metal supported within mesoporous carbon as compared with a conventional electrode catalyst. Specifically, when the composition ratio (y) of nickel of the catalyst metal supported within mesoporous carbon is greater than or equal to 0.02 and less than or equal to 0.47, the catalytic activity of the electrode catalyst in which the catalyst metal particles 12 include an L1₀ phase can be appropriately improved by the synergistic effect of two factors of the type of the catalyst support (mesoporous material) and the composition ratio (y) of nickel of the catalyst metal.

In addition, in the electrode catalyst of the present embodiment, by supporting the catalyst metal particles 12 within mesoporous carbon, even when the electrode catalyst layer is formed using an ionomer, it is possible to appropriately suppress contact between the catalyst metal particles 12 and the ionomer.

As described above, for example, when a fuel cell is produced using the electrode catalyst of the present embodiment, the fuel cell can obtain high power generation performance.

Numerous modifications and alternative embodiments of the present disclosure will be apparent to those skilled in the art in view of the foregoing description. Accordingly, the description is to be construed as illustrative only, and is provided for the purpose of teaching those skilled in the art the best mode of carrying out the disclosure. The details of the structure and/or function may be varied substantially without departing from the spirit of the disclosure.

### Industrial Applicability

One aspect of the present disclosure can be used for, for example, an electrode catalyst capable of improving the catalytic activity of a catalyst metal supported within a mesoporous material as compared with conventional technology.

### Reference Signs List

- 10: electrode catalyst
- 11: mesoporous material
- 12: catalyst metal particles
- 20: ionomer
- R: L1₀ ratio

## Claims

1. An electrode catalyst comprising:
a mesoporous material; and
catalyst metal particles supported at least within the mesoporous material and including platinum and a metal different from platinum,
wherein the mesoporous material has mesopores with a mode radius of greater than or equal to 1 nm and less than or equal to 25 nm and a pore volume of greater than or equal to 1.0 cm³/g and less than or equal to 3.0 cm³/g,
the catalyst metal is represented by the chemical formula PtₓCo_{1-y}Ni_{y}, where x is greater than or equal to 1 and less than or equal to 3 and y is greater than or equal to 0.20 and less than or equal to 0.47, and
the catalyst metal particles include an L1₀ phase.

2. The electrode catalyst according to claim 1, wherein the mode radius of the mesopores of the mesoporous material is greater than or equal to 3 nm and less than or equal to 6 nm.

3. The electrode catalyst according to claim 1 or 2, wherein the mesoporous material is mesoporous carbon.
